# FASCICULE DE BREVET EUROPEEN

(11) **EP 4 199 594 B1**
(45) Date de publication et mention de la délivrance du brevet: **29.01.2025**
(21) Numéro de dépôt: 22213212.8
(22) Date de dépôt: 13.12.2022
(51) Int. Cl.: H04W 40/22, H04W 84/18, H04W 88/04, H04W 88/06, H04W 92/04, H04W 92/10

(54) **PROCÉDÉ ET DISPOSITIF DE SÉLECTION D'UN NOEUD DANS UN RÉSEAU LOCAL**
VERFAHREN UND VORRICHTUNG ZUR AUSWAHL EINES KNOTENS IN EINEM LOKALEN NETZWERK
METHOD AND APPARATUS FOR SELECTING A NODE IN A LOCAL AREA NETWORK

(30) Priorité: 15.12.2021 FR 2113572
(43) Date de publication de la demande: 21.06.2023
(73) Titulaire: Sagemcom Broadband SAS, 92270 Bois-Colombes (FR)
(72) Inventeur: NGUYEN DINH HIEN, Mickaël Thien Bao, 92500 Rueil Malmaison (FR); LALAM, Massinissa, 92500 Rueil Malmaison (FR)
(74) Mandataire: Cabinet Le Guen Maillet

(56) Documents cités:
- US-A1- 2020 029 228
- US-A1- 2021 068 032
- US-A1- 2021 377 915

## Description

### DOMAINE TECHNIQUE

La présente invention concerne un procédé et un dispositif de sélection d'un nœud dans un réseau local comprenant des nœuds permettant une extension de couverture de communication sans-fil afin d'augmenter la portée du réseau local en coordonnant plusieurs points d'accès intégrés aux nœuds.

### ETAT DE LA TECHNIQUE ANTERIEURE

Dans les réseaux locaux LAN (« Local Area Network » en anglais), des systèmes d'extension de couverture de communication sans-fil peuvent être utilisés afin d'augmenter la portée de ces réseaux locaux LAN en coordonnant plusieurs points d'accès AP (« Access Point » en anglais) répartis. Ces différents points d'accès AP sont intégrés à des nœuds de communication, appelés simplement ci-après nœuds, interconnectés grâce à un sous-réseau d'acheminement ou d'amenée (« backhaul subnetwork » en anglais) et mettent tous à disposition un même réseau local sans-fil WLAN (« Wireless Local Area Network ») en anglais.

Les nœuds du sous-réseau d'acheminement sont connectés les uns aux autres grâce à une structure maillée en forme d'arbre, un nœud pouvant alors servir de relais entre deux autres nœuds du sous-réseau d'acheminement. Les nœuds du sous-réseau d'acheminement sont ainsi interconnectés grâce à des liaisons filaires, par exemple de type Ethernet, ou à des liaisons sans-fil. Les nœuds du sous-réseau d'acheminement sont connectés entre eux par un réseau qu'on appelle aussi « Réseau BackHaul » pouvant être soit filaire, soit sans-fil, ou une combinaison des deux.

Chaque nœud du sous-réseau d'acheminement émet au moins un réseau sans-fil qu'on appelle « Réseau FrontHaul » ou réseau frontal sur lequel se connectent les stations de l'utilisateur. Ce réseau frontal s'il utilise la technologie Wi-Fi / IEEE 802.11 est l'équivalent de ce qui se nomme BSS (Basic Service Set).

Au moins un des nœuds du sous-réseau d'acheminement est connecté à une passerelle résidentielle « gateway en anglais » qui fournit l'accès au réseau Internet. La passerelle résidentielle peut aussi faire partir du sous-réseau d'acheminement.

Dans le cadre des nœuds du sous-réseau d'acheminement couplés ou non à une passerelle résidentielle, le choix de la bande de fréquence servant au sous réseau d'acheminement se résumait autrefois à la bande de fréquence 2.4 GHz (limitée en termes de débit, très congestionnée) et à la bande 5 GHz permettant. De fait, la bande 5 GHz était souvent privilégiée pour le choix du sous-réseau d'acheminement. Cette fonctionnalité de sous-réseau d'acheminement est assurée par une interface radio dédiée ou non.

Chaque radio d'un nœud du sous réseau d'acheminement possède une partie client (station) qui vient s'associer à un point d'accès d'un autre nœud du sous réseau d'acheminement. Ce point d'accès peut être dédié à la fonctionnalité du sous réseau d'acheminement ou être le même que celui dédié au réseau frontal. Généralement, la partie réseau frontal d'un nœud d'un sous réseau d'acheminement est opérée par une radio qui peut à son tour servir au réseau frontal.

Aujourd'hui la plupart des solutions n'utilisent qu'une seule bande pour le sous réseau d'acheminement. Ce choix contraint évidemment le canal à être le même pour toutes les radios des équipements utilisés pour la fonction de sous réseau d'acheminement. L'ouverture de la bande 6 GHz aux technologies Wi-Fi permet dorénavant d'avoir deux bandes de fréquence supportant des transmissions haut débit (5 GHz et 6 GHz) et donc candidates à la fonction de sous réseau d'acheminement. Ceci rend le choix du sous réseau d'acheminement ou du réseau frontal encore plus complexe.

La topologie en forme d'arbre introduit une latence dans la transmission des données et il n'est pas possible aujourd'hui à un nœud de pouvoir choisir lorsque plusieurs nœuds permettant une extension de couverture sont disponibles, un nœud permettant une extension de couverture de communication sans fil auquel le nœud s'associe avant l'association audit nœud.

La demande de brevet US2020/029228 divulgue une méthode et un dispositif de sélection de canal.

La présente invention proposée permet d'optimiser le choix d'un nœud dans un réseau maillé pour garantir une latence optimale dans la transmission de données.

### EXPOSE DE L'INVENTION

A cette fin, selon un premier aspect, un mode de réalisation de l'invention propose un procédé de sélection d'un nœud dans un réseau local comprenant des nœuds permettant une extension de couverture de communication sans-fil afin d'augmenter la portée du réseau local en coordonnant plusieurs points d'accès intégrés aux nœuds, les nœuds étant interconnectés par une interface point d'accès d'un sous-réseau d'acheminement et une interface client du sous-réseau d'acheminement d'un autre nœud, chaque nœud du sous-réseau d'acheminement émettant au moins un réseau sans-fil appelé réseau frontal, caractérisé en ce que le procédé comporte les étapes, exécutées par un équipement pour s'associer au réseau local, de :
- obtention de chaque nœud permettant une extension de couverture de communication sans fil d'informations comprenant au moins une information représentative du niveau hiérarchique du nœud ainsi qu'une information indiquant si l'interface client du sous-réseau d'acheminement est connectée à une interface point d'accès du sous-réseau d'acheminement d'un nœud de niveau hiérarchique supérieur,
- sélection, à partir des informations obtenues, du nœud permettant une extension de couverture de communication sans fil auquel l'équipement s'associe.

Un mode de réalisation concerne aussi un dispositif de sélection d'un nœud dans un réseau local comprenant des nœuds permettant une extension de couverture de communication sans-fil afin d'augmenter la portée du réseau local en coordonnant plusieurs points d'accès intégrés aux nœuds, les nœuds étant interconnectés par une interface point d'accès d'un sous-réseau d'acheminement et une interface client du sous-réseau d'acheminement d'un autre nœud, chaque nœud du sous-réseau d'acheminement émettant au moins un réseau sans-fil appelé réseau frontal, caractérisé en ce que le dispositif est compris dans un équipement pour s'associer au réseau local, et comporte :
- des moyens d'obtention de chaque nœud permettant une extension de couverture de communication sans fil d'informations comprenant au moins une information représentative du niveau hiérarchique du nœud ainsi qu'une information indiquant si l'interface client du sous-réseau d'acheminement est connectée à une interface point d'accès du sous-réseau d'acheminement d'un nœud de niveau hiérarchique supérieur,
- des moyens de sélection, à partir des informations obtenues, du nœud permettant une extension de couverture de communication sans fil auquel l'équipement s'associe.

Ainsi il est permis à un équipement, avant une association, de pouvoir choisir lorsque plusieurs nœuds permettant une extension de couverture sont disponibles, le nœud permettant une extension de couverture de communication sans fil offrant les meilleures performances.

Selon un mode de réalisation particulier, l'équipement s'associant au réseau local est un nœud pouvant assurer l'extension de couverture de communication sans-fil et le nœud exécute en outre les étapes de :
- détermination, pour le nœud d'informations comprenant au moins une information représentative du niveau hiérarchique du nœud ainsi qu'une information indiquant si l'interface client du sous-réseau d'acheminement est connectée à une interface point d'accès du sous-réseau d'acheminement d'un nœud de niveau hiérarchique supérieur,
- émission des informations déterminées comprenant au moins une information représentative du niveau hiérarchique du nœud ainsi qu'une information indiquant si l'interface client du sous-réseau d'acheminement est connectée à une interface point d'accès du sous-réseau d'acheminement d'un nœud de niveau hiérarchique supérieur. Selon un mode de réalisation particulier, les informations sont obtenues à partir d'informations comprises dans des trames spontanées et/ou dans des trames de réponse à une sollicitation.

Selon un mode de réalisation particulier, les nœuds comportent au moins deux interfaces radio permettant de communiquer sur deux canaux différents et l'interface radio d'un nœud dont l'interface client s'associe à l'interface point d'accès de l'interface radio d'un autre nœud choisit le même canal pour toutes les interfaces point d'accès de l'interface radio dont l'interface client est associée à l'interface point d'accès de l'interface radio de l'autre nœud que le canal de l'interface point d'accès de l'interface radio de l'autre nœud.

Selon un mode de réalisation particulier, l'équipement obtient de chaque nœud permettant une extension de couverture de communication sans fil des informations indiquant si un nœud de niveau hiérarchique inférieur est associé au point d'accès du sous réseau d'acheminement du nœud.

Selon un mode de réalisation particulier, l'information représentative du niveau hiérarchique est une valeur entière, et lorsque le nœud s'associe à un nœud permettant une extension de couverture de communication sans fil, la valeur entière pour le nœud qui s'associe est incrémentée.

Selon un mode de réalisation particulier, l'information représentative du niveau hiérarchique est une mesure du temps mis pour recevoir une réponse entre le nœud et un nœud faisant office de passerelle Internet.

Selon un mode de réalisation particulier, l'information représentative du niveau hiérarchique est une représentation de l'état d'occupation cumulé de la liaison entre chaque nœud permettant une extension de couverture de communication sans fil et un nœud faisant office de passerelle Internet.

Un mode particulier concerne aussi un produit programme d'ordinateur. Il comprend des instructions pour implémenter, par un équipement, le procédé selon l'un des modes de réalisation précédents, lorsque ledit programme est exécuté par un processeur de l'équipement.

Un mode particulier concerne aussi un support de stockage. Il stocke un programme d'ordinateur comprenant des instructions pour implémenter, par un dispositif nœud, le procédé selon l'un des modes de réalisation précédents, lorsque ledit programme est exécuté par un processeur du dispositif nœud.

L'invention est définie par l'objet des revendications adossées.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1a] illustre schématiquement un premier exemple de réseau local dans un mode de réalisation ;
[Fig. 1b] illustre schématiquement un second exemple de réseau local dans un mode de réalisation ;
[Fig. 1c] illustre schématiquement un troisième exemple de réseau local dans un mode de réalisation ;
[Fig. 1d] illustre schématiquement un quatrième exemple de réseau local dans un mode de réalisation ;
[Fig. 1e] illustre schématiquement un cinquième exemple de réseau local dans un mode de réalisation ;
[Fig. 2] illustre schématiquement l'architecture d'un nœud selon un mode de réalisation ; [Fig. 3] illustre un exemple d'un procédé exécuté selon un mode de réalisation.

### EXPOSE DETAILLE DE MODES DE REALISATION

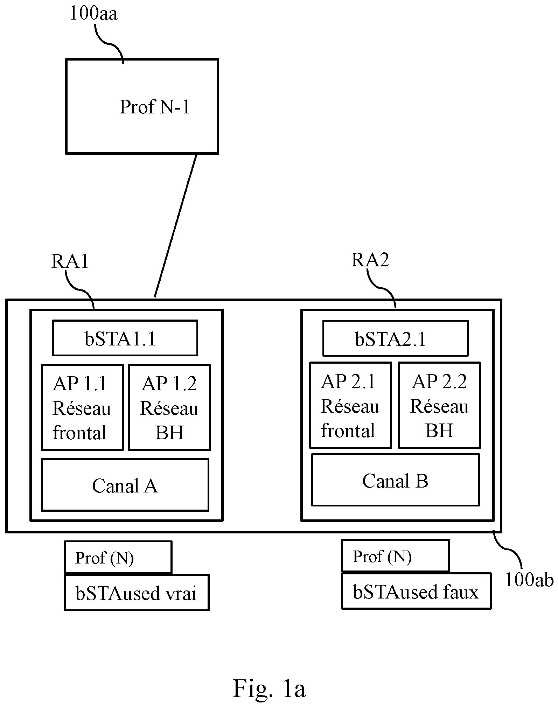

La **Fig. 1a** illustre schématiquement un premier réseau dans un mode de réalisation.

Le réseau local maillé est construit autour d'un sous-réseau d'acheminement comportant un ensemble de nœuds 100aa et 100ab interconnectés. Chaque nœud 100aa et 100ab du sous-réseau d'acheminement comprend une pluralité d'interfaces radio :
- une interface radio RA1 fonctionnant sur une première bande de fréquence par exemple la bande de fréquence 5GHz,
- une interface radio RA2 fonctionnant sur une seconde bande de fréquence par exemple la bande de fréquence 6 GHz,

La première interface radio RA1 comprend :
- une interface client bSTA1.1 du sous-réseau d'acheminement,
- une interface point d'accès AP1.2 du sous-réseau d'acheminement, l'interface point d'accès AP1.2 étant dédiée à l'association d'interface client d'autre nœud du réseau d'acheminement (Réseau BH),
- optionnellement une interface point d'accès AP1.1 correspondant à une interface point d'accès du réseau local utilisateur, cette interface étant dédiée à l'association de stations ou de terminaux (Réseau frontal),
- un canal radio noté A pour l'émission et la réception dans la bande de fréquence de la radio RA1.

La seconde interface radio RA2 comprend :
- une interface client bSTA2.1 du sous-réseau d'acheminement,
- une interface point d'accès AP2.2 du sous-réseau d'acheminement, l'interface point d'accès AP2.2 étant dédiée à l'association d'interface client d'autre nœud du réseau d'acheminement (Réseau BH),
- optionnellement une interface point d'accès AP2.1 correspondant à une interface point d'accès du réseau local utilisateur, cette interface étant dédiée à l'association de stations ou terminaux (Réseau frontal),
- un canal radio noté B pour l'émission et la réception dans la bande de fréquence de la radio RA2.

Il est entendu ci-après par le terme « nœud », un équipement offrant des capacités de connectivité et constitutif du réseau local maillé.

Il est entendu ci-après par le terme « station », un équipement fixe ou mobile utilisant les ressources du réseau local maillé via l'intermédiaire des nœuds dudit réseau local. Une station est par exemple un terminal mobile sans-fil, une enceinte sans-fil.

Dans différents exemples, les équipements, nœuds ou stations, sont respectivement chacun compatible avec l'une ou plusieurs normes de la famille des standards IEEE 802.11.

Une radio peut héberger plusieurs interfaces points d'accès, chaque interface point d'accès AP ayant ses propres paramètres de connexion (e.g. une interface points d'accès pour un réseau privé, un réseau public, un réseau vidéo ...).

Afin que le réseau soit stable, si une interface client bSTA du sous-réseau d'acheminement s'associe à une interface point d'accès opérant sur un canal donné du sous réseau d'acheminement, tous les points d'accès hébergés par l'interface radio hébergeant l'interface client bSTA du sous réseau d'acheminement adopteront le même canal donné pour émettre et recevoir.

Selon un mode de réalisation, lorsque chaque nœud 100 diffuse spontanément, dans un mode dit passif, (par exemple toutes les 0.1 secondes environ) une trame balise (nommée « beacon » en anglais), celui-ci insère dans la trame de balise au moins un élément d'information comprenant une information représentative du niveau hiérarchique du nœud au sein du réseau.

L'information représentative du niveau hiérarchique est par exemple une valeur entière, par exemple la valeur nulle pour un nœud faisant office de passerelle internet, c'est à dire directement connectée à Internet et qui représente l'origine du réseau d'acheminement. La valeur entière est incrémentée par chaque nœud de niveau de hiérarchie inférieur. L'information représentative du niveau hiérarchique est ainsi représentative du nombre de nœuds séparant le nœud de la connexion internet.

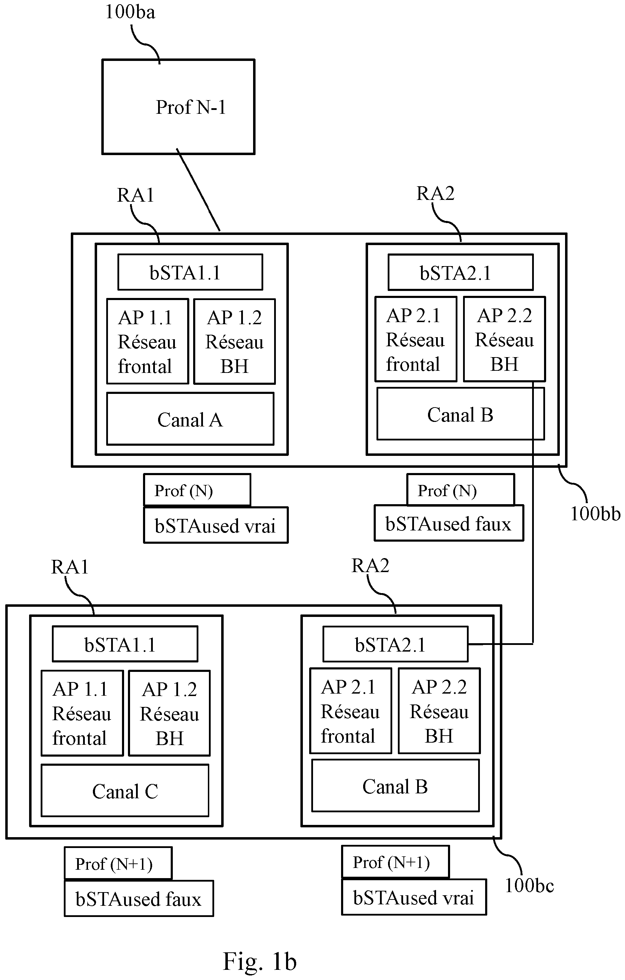

A chaque fois qu'une interface client bSTA1.1 ou bSTA2.1 du sous-réseau d'acheminement s'associe à une interface point d'accès AP1.2 ou AP2.2 du sous-réseau d'acheminement dont le rang hiérarchique est N, par exemple Prof(N) dans la Fig. 1a, tous les points d'accès hébergés par le nœud hébergeant l'interface client bSTA1.1 ou bSTA2.1 auront le rang hiérarchique N+1, par exemple Prof(N+1) dans la Fig. 1b, et le diffuseront à leur tour.

L'information représentative du niveau hiérarchique est par exemple obtenue à partir d'une commande ping effectuée par chaque nœud. L'information représentative du niveau hiérarchique est une mesure du temps mis pour recevoir une réponse, appelé temps aller-retour RTT (« round trip time » en anglais) entre le nœud et le nœud faisant office de passerelle, c'est à dire directement connectée à Internet et qui représente l'origine du réseau d'acheminement.

L'information représentative du niveau hiérarchique est par exemple une représentation du taux d'occupation cumulé entre le nœud et le nœud faisant office de passerelle Internet. Le taux d'occupation est calculé pour le nœud faisant office de passerelle Internet et répercuté sur chaque liaison avec un nœud de rang inférieur dans l'architecture arborescente. Le taux d'occupation d'une interface radio est la combinaison du temps d'activité (émission et réception de trames Radio par rapport au temps total.

Ainsi, plus la valeur de l'information représentative du niveau hiérarchique est de valeur faible, plus le niveau hiérarchique est élevé.

Il est à remarquer ici, que les différents exemples d'informations représentatives du niveau hiérarchique peuvent être combinés partiellement ou en totalité pour représenter l'information représentative du niveau hiérarchique.

Dans un mode dit de balayage actif, lorsqu'un équipement tel qu'un nœud ou une station souhaite découvrir son environnement radio, comme par exemple les points d'accès environnant, le nœud émet une trame de sollicitation (« probe request » en anglais) demandant quel réseau est disponible sur ce canal. Chaque nœud du réseau présent sur ce canal répond à cette trame de gestion de sollicitation par une trame de réponse à une sollicitation (« probe response » en anglais) comprenant au moins l'information représentative du niveau hiérarchique du nœud au sein du réseau.

L'élément d'information comporte en outre une information indiquant si l'interface client du sous-réseau d'acheminement est connectée à une interface point d'accès du sous-réseau d'acheminement d'un autre nœud.

Par exemple, l'information est mise à la valeur vrai si l'interface client bSTA1.2 ou bSTA2.1 du sous-réseau d'acheminement hébergée par l'interface radio RA1 ou RA2 est connectée à une interface point d'accès AP1.1 ou AP2.2 du sous-réseau d'acheminement d'un nœud de niveau hiérarchique N-1, mise à faux sinon.

Ainsi dans l'exemple de la Fig. 1a, le nœud 100ab ayant son interface client bSTA1.1 connectée à une interface point d'accès du sous-réseau d'acheminement du nœud 100aa, émet sur le canal A, des trames balise spontanées et/ou des trames de réponse à une sollicitation comprenant au moins l'information représentative du niveau hiérarchique du nœud ainsi que l'information notée bSTAused mise à la valeur vrai.

L'information représentative du niveau hiérarchique est par exemple égale au rang N.

Le nœud 100ab n'ayant pas son interface client bSTA2.1 connectée à une interface point d'accès du sous-réseau d'acheminement d'un autre nœud, émet sur le canal B, des trames spontanées et/ou des trames de réponse à une sollicitation comprenant au moins l'information représentative du niveau hiérarchique du nœud, par exemple N ainsi que l'information notée bSTAused mise à la valeur faux.

L'information représentative du niveau hiérarchique du nœud et l'information notée bSTAused sont par exemple insérées en tant que nouvel élément d'information (« lnformation Element (IE) » en anglais) au sein de ces trames.

Chaque nouveau nœud ou station qui recherche un point d'accès auquel s'associer peut, avant association, choisir le point d'accès optimal dans la topologie du réseau. Chaque nouveau nœud ou station pourra également décider si les conditions de propagations (par exemple en se basant sur un indicateur de la puissance reçue (« Received Signal Strength Indicator (RSSI) » en anglais) entre les divers points d'accès possibles sont équivalentes, et privilégier une interface radio ne servant pas au sous réseau d'acheminement.

Les stations sont par exemple des téléphones intelligents (« smartphone » en anglais) ou une tablette, un ordinateur, une télévision, une unité de stockage en réseau NAS (« Network Attached Storage » en anglais).

La **Fig. 1b** illustre schématiquement un second exemple de réseau local dans un mode de réalisation.

Le réseau local est construit autour d'un sous-réseau d'acheminement comportant un ensemble de nœuds 100ba et 100bb interconnectés et d'un nouveau nœud 100bc.

Les nœuds 100ba et 100bb du sous-réseau d'acheminement sont identiques aux nœuds 100aa et 100ab de la Fig. 1a.

Les points d'accès hébergés par le nœud 100bb ont le niveau hiérarchique N et les points d'accès hébergés par le nœud 100ba ont le niveau hiérarchique N-1. L'information représentative du niveau hiérarchique du nœud 100bb est par exemple N ou une valeur de RTT égale à 15ms ou un taux d'occupation de 25%.

Ainsi dans l'exemple de la Fig. 1b, le nœud 100bb ayant son interface client bSTA1.1 connectée à une interface point d'accès du sous-réseau d'acheminement du nœud 100ba, émet sur le canal A, des trames spontanées et/ou des trames de réponse à une sollicitation comprenant au moins l'information représentative du niveau hiérarchique ainsi que l'information notée bSTAused mise à la valeur vrai.

Le nœud 100bb n'ayant pas son interface client du sous-réseau d'acheminement bSTA2.1 connectée à une interface point d'accès d'un autre nœud du sous-réseau d'acheminement , émet sur le canal B, des trames spontanées et/ou des trames de réponse à une sollicitation comprenant au moins l'information représentative du niveau hiérarchique du nœud ainsi que l'information notée bSTAused mise à la valeur faux.

L'information représentative du niveau hiérarchique et l'information notée bSTAused sont par exemple insérées en tant que nouvel élément d'information (« lnformation Element (IE) » en anglais) au sein de ces trames.

Dans l'exemple de la Fig. 1b, le nœud 100bc choisit d'associer son interface client bSTA2.1 à l'interface point d'accès AP2.2 du sous-réseau d'acheminement dont le niveau hiérarchique est N pour ne pas encombrer le canal A car l'interface radio RA1 utilise le canal A pour le réseau d'acheminement et pour le réseau frontal.

Avec l'information représentative du niveau hiérarchique, par exemple insérée en tant que nouvel élément d'information, les points d'accès hébergés par le nœud 100bc déterminent leur niveau hiérarchique N+1.

Le nœud 100bc ayant son interface client du sous réseau d'acheminement bSTA2.1 connectée à l'interface point d'accès AP 2.2 du sous-réseau d'acheminement du nœud 100bb, émettra sur le canal B identique à celui utilisé par l'interface radio RA2 hébergeant l'interface client AP2.2 du nœud 100bb, des trames spontanées et/ou des trames de réponse à une sollicitation comprenant au moins l'information représentative du niveau hiérarchique du nœud ainsi que l'information notée bSTAused mise à la valeur vrai.

Le nœud 100bc n'ayant pas son interface client du sous réseau d'acheminement bSTA1.1 connectée à une interface point d'accès du sous-réseau d'acheminement d'un autre nœud (nœud 100ba ou 100bb), émettra dans un canal noté C, qui peut être différent du canal A utilisé par le nœud 100bb, des trames spontanées et/ou des trames de réponse à une sollicitation comprenant au moins l'information représentative du niveau hiérarchique du nœud ainsi que l'information notée bSTAused mise à la valeur faux.

L'information représentative du niveau hiérarchique est par exemple N+1. L'information représentative du niveau hiérarchique est par exemple une valeur de RTT égale à 25ms ou un taux d'occupation de 35%.

L'information représentative du niveau hiérarchique du nœud et l'information notée bSTAused sont par exemple insérées en tant que nouvel élément d'information (« lnformation Element (IE) » en anglais) au sein de ces trames.

Il est à noter que la possibilité de pouvoir diversifier les canaux utilisés sur les différentes interfaces radios permet d'utiliser le médium avec moins de collisions. Aussi, le fait de connaître les interfaces radios connectées via leur interface client bSTA du sous réseau d'acheminement permet de forcer explicitement l'utilisation d'un autre canal pour l'interface radio RA1 du nœud 100bc. Il est ainsi possible d'optimiser l'utilisation du medium plus efficacement par rapport aux équipements voisins sans nécessairement s'y connecter ou de devoir directement se coordonner.

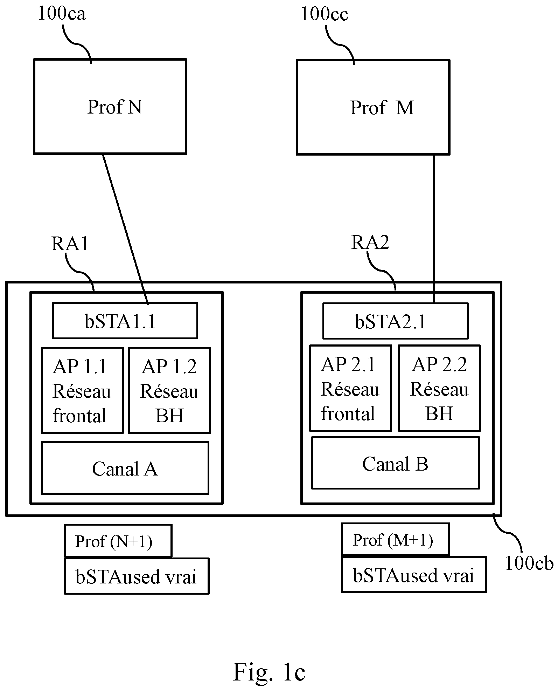

La **Fig. 1c** illustre schématiquement un troisième exemple de réseau local dans un mode de réalisation.

Le réseau local est construit autour d'un sous-réseau d'acheminement comportant un ensemble de nœuds 100ca, 100cb et 100cc interconnectés.

Dans l'exemple de la Fig. 1c, l'interface client du sous réseau d'acheminement bSTA1.1 du nœud 100cb est connectée à une interface point d'accès du sous-réseau d'acheminement du nœud 100ca et l'interface client du sous réseau d'acheminement bSTA2.1 du nœud 100cb est connectée à une interface point d'accès du sous-réseau d'acheminement du nœud 100cc.

Les points d'accès hébergés par le nœud 100ca ont le rang hiérarchique N et les points d'accès hébergés par le nœud 100cc ont le rang hiérarchique M.

Avec les informations obtenues par les nœuds 100ca et 100cc, les points d'accès hébergés de l'interface radio RA1 du nœud 100cb déterminent ainsi le rang hiérarchique N +1 et les points d'accès hébergés de l'interface radio RA2 du nœud 100cb déterminent ainsi le rang hiérarchique M +1.

Ainsi dans l'exemple de la Fig. 1c, le nœud 100cb ayant son interface client du sous réseau d'acheminement bSTA1.1 connectée à une interface point d'accès du sous-réseau d'acheminement du nœud 100ca, émet sur le canal A, des trames spontanées et/ou des trames de réponse à une sollicitation comprenant au moins l'information représentative du niveau hiérarchique de la radio RA1 du nœud 100cb ainsi que l'information notée bSTAused mise à la valeur vrai.

Le nœud 100cb ayant son interface client du sous réseau d'acheminement bSTA2.1 connectée à une interface point d'accès du sous-réseau d'acheminement du nœud 100cc, émet sur le canal B, des trames spontanées et/ou des trames de réponse à une sollicitation comprenant au moins l'information représentative du niveau hiérarchique du de la radio RA2 du nœud 100cb ainsi que l'information notée bSTAused mise à la valeur vrai. L'information représentative du niveau hiérarchique du de la radio du nœud et l'information notée bSTAused sont par exemple insérées en tant que nouvel élément d'information (« lnformation Element (IE) » en anglais) au sein de ces trames.

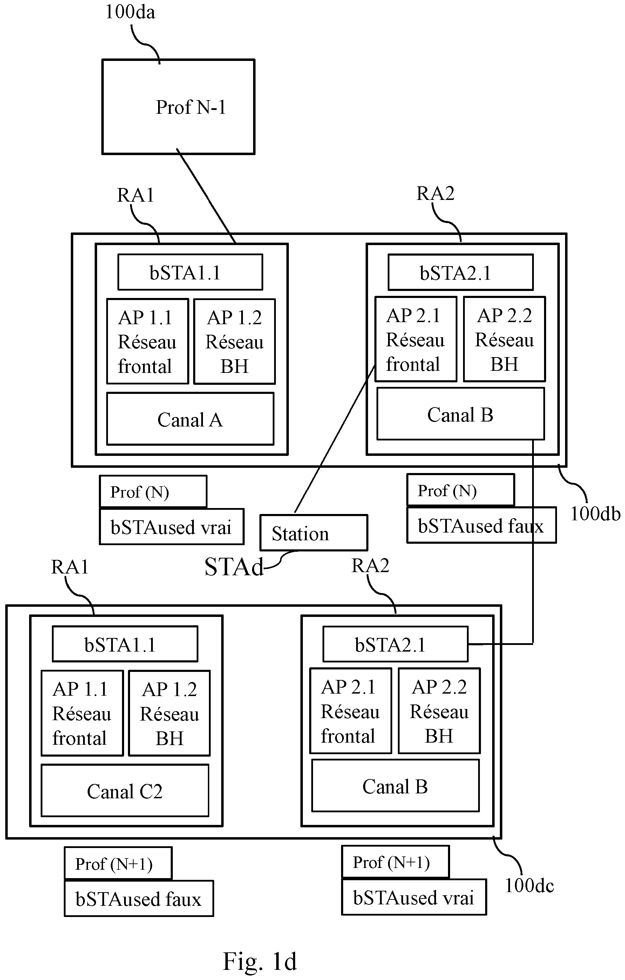

La **Fig. 1d** illustre schématiquement un quatrième exemple de réseau local dans un mode de réalisation.

Le réseau local est construit autour d'un sous-réseau d'acheminement comportant un ensemble de nœuds 100da, 100db et 100dc.

Les nœud 100da, 100db et 100dc du sous-réseau d'acheminement sont identiques aux nœuds 100ba, 100bb et 100bc de la Fig. 1b.

Les points d'accès hébergés par le nœud 100db ont le rang hiérarchique N et les points d'accès hébergés par le nœud 100da ont le rang hiérarchique N-1.

Ainsi dans l'exemple de la Fig. 1d, le nœud 100db ayant son interface client du sous réseau d'acheminement bSTA1.1 connectée à une interface client du sous-réseau d'acheminement du nœud 100da, émet sur le canal A, des trames spontanées et/ou des trames de réponse à une sollicitation comprenant au moins l'information représentative du niveau hiérarchique du nœud ainsi que l'information notée bSTAused mise à la valeur vrai.

Le nœud 100db n'ayant pas son interface client du sous-réseau d'acheminement bSTA2.1 connectée à une interface point d'accès d'un autre nœud du sous-réseau d'acheminement , émet sur le canal B, des trames spontanées et/ou des trames de réponse à une sollicitation comprenant au moins l'information représentative du niveau hiérarchique du nœud ainsi que l'information notée bSTAused mise à la valeur faux.

L'information représentative du niveau hiérarchique du nœud et l'information notée bSTAused sont par exemple insérées en tant que nouvel élément d'information (« lnformation Element (IE) » en anglais) au sein de ces trames.

L'information représentative du niveau hiérarchique du nœud 100db est par exemple le rang N ou une valeur de RTT égale à 15ms ou un taux d'occupation de 25%.

Le nœud 100dc a son interface client du sous réseau d'acheminement bSTA2.1 associée à l'interface point d'accès AP2.2 du sous-réseau d'acheminement dont le rang hiérarchique est N pour ne pas encombrer le canal A.

Les points d'accès hébergés par le nœud 100dc ont le rang hiérarchique N+1.

Le nœud 100dc ayant son interface client du sous réseau d'acheminement bSTA2.1 connectée à l'interface point d'accès AP 2.2 du sous-réseau d'acheminement du nœud 100db, émet sur le canal B identique à celui utilisé par l'interface radio RA2 hébergeant l'interface client AP2.2, des trames spontanées et/ou des trames de réponse à une sollicitation comprenant au moins l'information représentative du niveau hiérarchique du nœud ainsi que l'information notée bSTAused mise à la valeur vrai.

Le nœud 100dc n'ayant pas son interface client du sous réseau d'acheminement bSTA1.1 connectée à une interface point d'accès du sous-réseau d'acheminement d'un autre nœud (nœud 100da ou 100db), diffuse dans un canal noté C, qui peut être différent du canal A utilisé par le nœud 100db, des trames spontanées et/ou des trames de réponse à une sollicitation comprenant au moins l'information représentative du niveau hiérarchique du nœud ainsi que l'information notée bSTAused mise à la valeur faux.

L'information représentative du niveau hiérarchique du nœud 100dc est par exemple le rang N+1. L'information représentative du niveau hiérarchique est par exemple une valeur de RTT égale à 25ms ou un taux d'occupation de 35%.

L'information représentative du niveau hiérarchique du nœud et l'information notée bSTAused sont par exemple insérées dans ces trames en tant que nouvel élément d'information (« Information Element (IE) » en anglais).

Si une station STAd souhaite s'associer au Réseau frontal, la station STAd est apte à déterminer avant association le type d'utilisation de chaque radio au sein de chaque nœud en utilisant les nouveaux éléments d'informations. Selon le type de trafic, la station STAd privilégie un point d'accès frontal hébergé par une radio ayant le meilleur niveau hiérarchique et dont le point d'accès sous réseau d'acheminement n'est pas utilisé.

Le meilleur niveau hiérarchique est par exemple la plus petite valeur entière, la plus petite valeur de RTT ou le petit taux d'occupation.

Dans l'exemple de la Fig. 1d, la station STAd choisit le point d'accès réseau frontal AP2.1 de l'interface radio RA2 du nœud 100db.

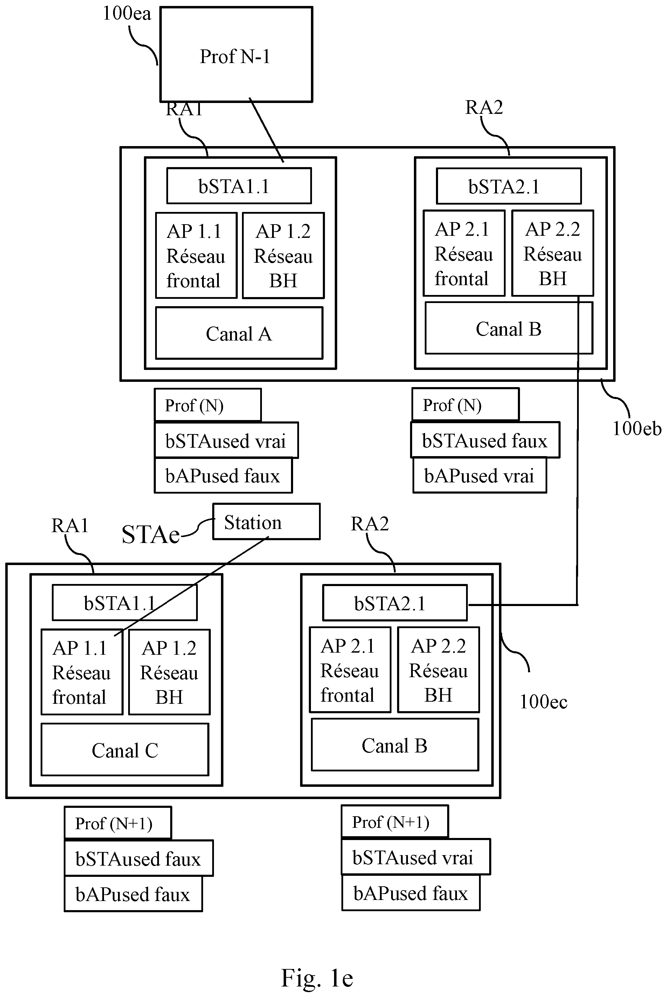

La **Fig. 1e** illustre schématiquement un cinquième exemple de réseau local dans un mode de réalisation.

Le réseau local est construit autour d'un sous-réseau d'acheminement comportant un ensemble de nœuds 100ea, 100eb et 100ec.

Les nœuds 100ea, 100eb et 100ec du sous-réseau d'acheminement sont identiques aux nœuds 100da, 100db et 100dc de la Fig. 1d.

Les points d'accès hébergés par le nœud 100eb ont le rang hiérarchique N et les points d'accès hébergés par le nœud 100ea ont le rang hiérarchique N-1.

Selon l'exemple de la Fig. 1e, chaque nœud diffuse en outre, pour chaque interface radio RA1, RA2, une information notée bAPused qui indique si au moins un nœud de niveau hiérarchique inférieur est associé au point d'accès du sous réseau d'acheminement via son interface client bSTA.

Ainsi dans l'exemple de la Fig. 1e, le nœud 100eb ayant son interface client du sous-réseau d'acheminement bSTA1.1 connectée à une interface point d'accès du sous-réseau d'acheminement du nœud 100ea et n'ayant aucune interface client du sous-réseau d'acheminement d'un autre nœud connecté à son interface point d'accès du sous-réseau d'acheminement AP1.1, émet sur le canal A, des trames spontanées et/ou des trames de réponse à une sollicitation comprenant au moins l'information représentative du niveau hiérarchique du nœud, l'information notée bSTAused mise à la valeur vrai et l'information bAPused à la valeur faux.

Le nœud 100eb n'ayant pas son interface client du sous réseau d'acheminement bSTA2.1 connectée à une interface point d'accès du sous-réseau d'acheminement du nœud 100ea et ayant l'interface client du sous-réseau d'acheminement du nœud 100ec connectée à son interface point d'accès du sous-réseau d'acheminement AP2.2, émet sur le canal B, des trames spontanées et/ou des trames de réponse à une sollicitation comprenant au moins l'information représentative du niveau hiérarchique du nœud, l'information notée bSTAused mise à la valeur faux et l'information bAPused à la valeur vrai.

L'information représentative du niveau hiérarchique est par exemple le rang N. L'information représentative du niveau hiérarchique est par exemple une valeur de RTT égale à 15ms ou un taux d'occupation de 25%.

Les points d'accès hébergés par le nœud 100ec ont le rang hiérarchique N+1.

Le nœud 100ec ayant son interface client du sous réseau d'acheminement bSTA2.1 connectée à l'interface point d'accès du sous-réseau d'acheminement AP 2.2 du nœud 100eb et n'ayant aucune interface client d'un autre nœud connecté à son interface point d'accès du sous-réseau d'acheminement AP2.2, émet sur le canal B identique à celui utilisé par l'interface radio RA2 hébergeant l'interface client AP2.2 du sous réseau d'acheminement, des trames spontanées et/ou des trames de réponse à une sollicitation comprenant au moins l'information représentative du niveau hiérarchique du nœud, l'information notée bSTAused mise à la valeur vrai et l'information bAPused à la valeur faux.

Le nœud 100ec n'ayant pas son interface client du sous réseau d'acheminement bSTA1.1 connectée à une interface point d'accès du sous-réseau d'acheminement d'un autre nœud (nœud 100da ou 100db) et n'ayant aucune interface client d'un autre nœud connecté à son interface point d'accès du sous-réseau d'acheminement AP1.2, diffuse dans un canal noté C, qui peut être différent du canal A utilisé par le nœud 100eb, des trames spontanée et/ou des trames de réponse à une sollicitation comprenant au moins l'information représentative du niveau hiérarchique du nœud, l'information notée bSTAused mise à la valeur faux et l'information bAPused à la valeur faux.

L'information représentative du niveau hiérarchique est par exemple N+1. L'information représentative du niveau hiérarchique est par exemple une valeur de RTT égale à 25ms ou un taux d'occupation de 35%.

Si une station STAe souhaite s'associer, la station est apte à déterminer avant association le type d'utilisation de chaque radio de chaque nœud et choisit de s'associer au point d'accès AP1. 1 de l'interface radio RA1 du nœud 100ec car les deux informations quant à l'utilisation de ladite radio RA1 pour des fonctions liées au sous-réseau d'acheminement sont à la valeur faux.

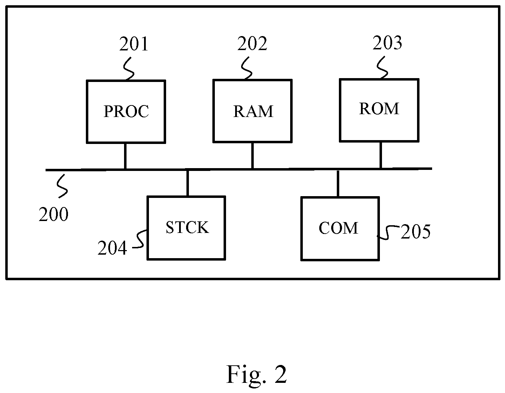

La **Fig. 2** illustre schématiquement l'architecture d'un nœud selon un mode de réalisation. Selon l'exemple d'architecture matérielle représenté à la Fig. 2, chaque nœud 100 (100aa, 100ab, 100ba, 100bb, 100bc, 100ca, 100cb, 100cc, 100da, 100db, 100dc, 100ea, 100eb, 100ec) comprend alors, reliés par un bus de communication 200 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage telle qu'un disque dur (ou un lecteur de support de stockage, tel qu'un lecteur de cartes SD (« Secure Digital » en anglais) 204 ; au moins une interface de communication 205 permettant au nœud de communiquer avec les équipements du réseau local.

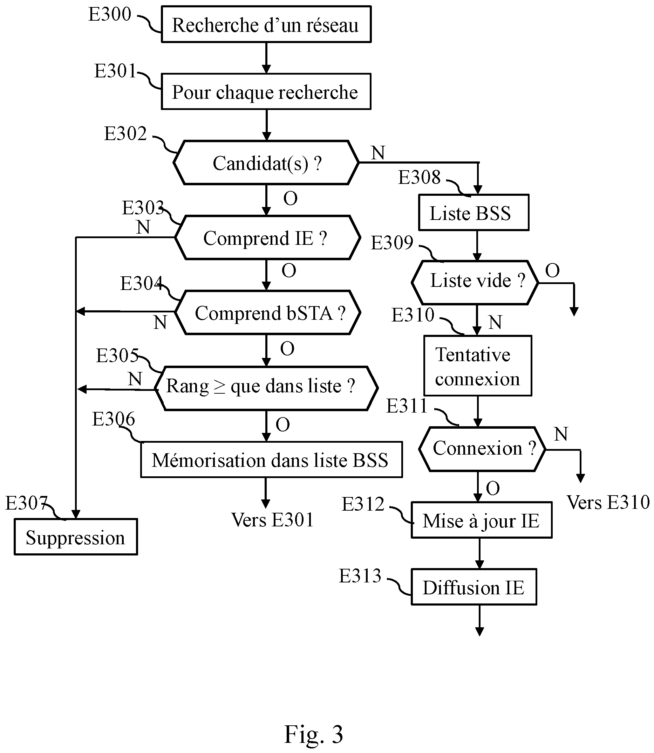

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le nœud est mis sous tension, le processeur 201 est capable de lire de la RAM 202 des instructions et de les exécuter. Ces instructions forment un programme d'ordinateur causant la mise en œuvre, par le processeur 201, de tout ou partie du procédé décrit en relation avec la Fig. 3.

Le procédé décrit ci-après en relation avec la Fig. 3 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le nœud comprend de la circuiterie électronique configurée pour mettre en œuvre les procédés décrits en relation avec la Fig. 3.

La **Fig. 3** illustre un exemple d'un procédé exécuté selon un mode de réalisation.

Le présent algorithme est exécuté par un équipement tel que par exemple un nœud ou une station. Le présent algorithme sera décrit dans un exemple dans lequel il est exécuté par un nœud.

A l'étape E300, le nœud 100 déclenche une procédure de recherche d'un réseau local sans fil pour se connecter à celui-ci.

Chaque nœud 100 du réseau sans fil émet spontanément, dans un mode dit passif (par exemple toutes les 0.1 secondes environ), une trame spontanée dans laquelle est inséré un élément d'information comprenant une information représentative du niveau hiérarchique du nœud au sein du réseau et une information indiquant si l'interface point d'accès du sous-réseau d'acheminement est connectée à une interface client du sous-réseau d'acheminement d'un nœud de niveau hiérarchique supérieur.

Dans un mode dit de balayage actif, lorsque le nœud souhaite découvrir un réseau sans fil, le nœud émet une trame de sollicitation (« probe request » en anglais) demandant quel réseau est disponible sur ce canal. Chaque nœud du réseau qui reçoit la trame de sollicitation répond par une trame de réponse à une sollicitation (« probe response » en anglais) comprenant au moins l'information représentative du niveau hiérarchique du nœud au sein du réseau et une information indiquant si l'interface point d'accès du sous-réseau d'acheminement est connectée à une interface client du sous-réseau d'acheminement d'un nœud de niveau hiérarchique supérieur.

A l'étape E301, le nœud mémorise chaque trame spontanée reçue et/ou chaque trame de réponse à une sollicitation reçue. Les nœuds ayant émis les trames sont considérés comme des nœuds candidats.

A l'étape E302, le nœud vérifie si une trame spontanée reçue et/ou chaque trame de réponse à une sollicitation reçue émise par un nœud candidat n'a pas été analysée et dans l'affirmative la sélectionne et passe à l'étape E303. Dans la négative le nœud passe à l'étape E308.

A l'étape E303, le nœud vérifie si la trame spontanée ou la trame de réponse à une sollicitation comporte un élément d'information selon un mode de réalisation.

L'élément d'information comporte au moins l'information représentative du niveau hiérarchique du nœud ayant émis la trame spontanée ou la trame de réponse à une sollicitation. Dans l'affirmative, le nœud passe à l'étape E304.

Si la trame spontanée ou la trame de réponse à une sollicitation ne comporte l'élément d'information selon un mode de réalisation, le nœud passe à l'étape E307.

A l'étape E307, le nœud supprime la trame spontanée ou la trame de réponse à une sollicitation.

A l'étape E304, le nœud vérifie si l'élément d'information comporte en outre une information indiquant si l'interface client du sous-réseau d'acheminement du nœud ayant émis la trame spontanée ou la trame de réponse à une sollicitation est connectée à une interface point d'accès du sous-réseau d'acheminement d'un nœud de niveau hiérarchique supérieur.

Dans l'affirmative, le nœud passe à l'étape E305. Dans la négative, le nœud passe à l'étape E307.

A l'étape E305, le nœud vérifie si l'information représentative du niveau hiérarchique du nœud ayant émis la trame spontanée ou la trame de réponse à une sollicitation a un niveau hiérarchique supérieur ou égal à une information représentative du niveau hiérarchique d'un nœud ayant émis la trame spontanée ou la trame de réponse à une sollicitation e mémorisée dans une liste de points d'accès potentiels (liste BSS) du réseau local.

Un niveau hiérarchique supérieur ou égal à un autre niveau hiérarchique est un niveau hiérarchique dont la valeur de l'information représentative du niveau hiérarchique est de valeur inférieure ou égale à l'autre niveau hiérarchique.

Dans l'affirmative, le nœud passe à l'étape E306. Dans la négative, le nœud passe à l'étape E307.

Par exemple, le nœud 100ec a une information représentative du niveau hiérarchique de rang hiérarchique N+1 ou a une information représentative du niveau hiérarchique égale à la valeur de RTT de à 25ms ou a un taux d'occupation de 35% et le nœud 100eb, précédemment mémorisé dans la liste de points d'accès potentiels du réseau local, a une information représentative du niveau hiérarchique égale à N ou a une information représentative du niveau hiérarchique égale à la valeur de RTT de à 15ms ou a un taux d'occupation de 25%.

Le nœud identifie le nœud 100eb comme ayant un niveau hiérarchique supérieur ou égal au nœud 100ec et passe à l'étape E307.

A l'étape E306, le nœud mémorise dans la liste de points d'accès potentiels (liste BBS) du réseau local les informations comprises dans la trame spontanée ou la trame de réponse à une sollicitation sélectionnée.

Cette opération effectuée, le nœud retourne à l'étape E301.

A l'étape E308, le nœud sélectionne la liste de points d'accès potentiels du réseau local.

A l'étape E309, le nœud vérifie si la liste de points d'accès potentiels du réseau local est vide. Dans l'affirmative le nœud interrompt le présent algorithme. Dans la négative, le nœud passe à l'étape E310.

A l'étape E310, le nœud, sélectionne un nœud de la liste de points d'accès potentiels et commande une tentative de connexion avec le nœud de la liste de points d'accès potentiels sélectionné.

A l'étape E311, le nœud vérifie si la connexion avec le nœud est établie. Dans la négative, le nœud sélectionne un autre nœud de la liste de points d'accès potentiels du réseau local et retourne à l'étape E310. Dans l'affirmative, le nœud passe à l'étape E312.

A l'étape E312, lorsque le périphérique est un nœud, le nœud met à jour l'information représentative de son niveau hiérarchique ainsi que l'information indiquant si l'interface point d'accès du sous-réseau d'acheminement est connectée à une interface client du sous-réseau d'acheminement d'un nœud de niveau hiérarchique supérieur.

A l'étape E313, lorsque le périphérique est un nœud, le nœud émet des trames spontanées et/ou de réponse à une sollicitation comprenant au moins l'information représentative du niveau hiérarchique du nœud ainsi que l'information indiquant si l'interface client du sous-réseau d'acheminement est connectée à une interface point d'accès du sous-réseau d'acheminement d'un nœud de niveau hiérarchique supérieur.

## Revendications

1. Procédé de sélection d'un nœud dans un réseau local comprenant des nœuds permettant une extension de couverture de communication sans-fil afin d'augmenter la portée du réseau local en coordonnant plusieurs points d'accès intégrés aux nœuds, les nœuds étant interconnectés par une interface point d'accès d'un sous-réseau d'acheminement et une interface client du sous-réseau d'acheminement d'un autre nœud, chaque nœud du sous-réseau d'acheminement émettant au moins un réseau sans-fil appelé réseau frontal, les nœuds comportent au moins deux interfaces radio permettant de communiquer sur deux canaux différents, **caractérisé en ce que** le procédé comporte les étapes, exécutées par un équipement pour s'associer au réseau local, de :
- obtention (E300) de chaque nœud permettant une extension de couverture de communication sans fil, et pour chaque interface radio du nœud, d'informations comprenant au moins une information représentative du niveau hiérarchique du nœud ainsi qu'une information indiquant si l'interface client de l'interface radio du nœud du sous-réseau d'acheminement est connectée à une interface point d'accès du sous-réseau d'acheminement d'un nœud de niveau hiérarchique supérieur,
- sélection (E305, E311), à partir des informations obtenues et parmi les nœuds permettant une extension de couverture pour lesquels les informations comprenant au moins une information représentative du niveau hiérarchique du nœud et l'information indiquant si l'interface client de l'interface radio du nœud du sous-réseau d'acheminement est connectée à une interface point d'accès du sous-réseau d'acheminement d'un nœud de niveau hiérarchique supérieur ont été obtenues, du nœud permettant une extension de couverture de communication sans fil auquel l'équipement s'associe.

2. Procédé selon la revendication 1, **caractérisé en ce que** l'équipement s'associant au réseau local est un nœud pouvant assurer l'extension de couverture de communication sans-fil et **en ce que** l'équipement qui est un nœud exécute en outre les étapes de :
- détermination (E312), pour le nœud, d'informations comprenant au moins une information représentative du niveau hiérarchique du nœud ainsi qu'une information indiquant si l'interface client du sous-réseau d'acheminement est connectée à une interface point d'accès du sous-réseau d'acheminement d'un nœud de niveau hiérarchique supérieur,
- émission (E313) des informations déterminées comprenant au moins une information représentative du niveau hiérarchique du nœud ainsi qu'une information indiquant si l'interface client du sous-réseau d'acheminement est connectée à une interface point d'accès du sous-réseau d'acheminement d'un nœud de niveau hiérarchique supérieur.

3. Procédé selon la revendication 1 ou 2, **caractérisé en ce que** les informations sont obtenues à partir d'informations comprises dans des trames spontanées et/ou dans des trames de réponse à une sollicitation.

4. Procédé selon l'une quelconque des revendications 1 à 3, **caractérisé en ce que** l'interface radio d'un nœud dont l'interface client s'associe à l'interface point d'accès de l'interface radio d'un autre nœud choisit le même canal pour toutes les interfaces point d'accès de l'interface radio dont l'interface client est associée à l'interface point d'accès de l'interface radio de l'autre nœud que le canal de l'interface point d'accès de l'interface radio de l'autre nœud.

5. Procédé selon la revendication 4, **caractérisé en ce que** l'équipement obtient de chaque nœud permettant une extension de couverture de communication sans fil des informations indiquant si un nœud de niveau hiérarchique inférieur est associé au point d'accès du sous réseau d'acheminement du nœud.

6. Procédé selon l'une quelconque des revendications 1 à 5, **caractérisé en ce que** l'information représentative du niveau hiérarchique est une valeur entière, et lorsque le nœud s'associe à un nœud permettant une extension de couverture de communication sans fil, la valeur entière pour le nœud qui s'associe est incrémentée.

7. Procédé selon l'une quelconque des revendications 1 à 5, **caractérisé en ce que** l'information représentative du niveau hiérarchique est une mesure du temps mis pour recevoir une réponse entre le nœud et un nœud faisant office de passerelle Internet.

8. Procédé selon l'une quelconque des revendications 1 à 5, **caractérisé en ce que** l'information représentative du niveau hiérarchique est une représentation de l'état d'occupation cumulé de la liaison entre chaque nœud permettant une extension de couverture de communication sans fil et un nœud faisant office de passerelle Internet.

9. Dispositif de sélection d'un nœud dans un réseau local comprenant des nœuds permettant une extension de couverture de communication sans-fil afin d'augmenter la portée du réseau local en coordonnant plusieurs points d'accès intégrés aux nœuds, les nœuds étant interconnectés par une interface point d'accès d'un sous-réseau d'acheminement et une interface client du sous-réseau d'acheminement d'un autre nœud, chaque nœud du sous-réseau d'acheminement émettant au moins un réseau sans-fil appelé réseau frontal, **caractérisé en ce que** le dispositif est compris dans un équipement pour s'associer au réseau local, et comporte :
- des moyens d'obtention de chaque nœud permettant une extension de couverture de communication sans fil d'informations comprenant au moins une information représentative du niveau hiérarchique du nœud ainsi qu'une information indiquant si l'interface client du sous-réseau d'acheminement est connectée à une interface point d'accès du sous-réseau d'acheminement d'un nœud de niveau hiérarchique supérieur,
- des moyens de sélection, à partir des informations obtenues et parmi les nœuds permettant une extension de couverture pour lesquels les informations comprenant au moins une information représentative du niveau hiérarchique du nœud et l'information indiquant si l'interface client de l'interface radio du nœud du sous-réseau d'acheminement est connectée à une interface point d'accès du sous-réseau d'acheminement d'un nœud de niveau hiérarchique supérieur ont été obtenues, du nœud permettant une extension de couverture de communication sans fil auquel l'équipement s'associe.

10. Un produit programme d'ordinateur **caractérisé en ce qu'**il comprend des instructions pour implémenter, par un équipement, le procédé selon l'une quelconque des revendications 1 à 8, lorsque ledit programme est exécuté par un processeur de l'équipement.

11. Un support de stockage **caractérisé en ce qu'**il stocke un programme d'ordinateur comprenant des instructions pour implémenter, par un équipement, le procédé selon l'une quelconque des revendications 1 à 8, lorsque ledit programme est exécuté par un processeur de l'équipement.

## Patentansprüche

1. Verfahren zur Auswahl eines Knotens in einem lokalen Netzwerk, das eine Abdeckungserweiterung drahtloser Kommunikation ermöglichende Knoten enthält, um die Reichweite des lokalen Netzwerks zu erhöhen, indem mehrere in die Knoten integrierte Zugangspunkte koordiniert werden, wobei die Knoten durch eine Zugangspunkt-Schnittstelle eines Routing-Teilnetzes und eine Client-Schnittstelle des Routing-Teilnetzes eines anderen Knotens miteinander vernetzt sind, wobei jeder Knoten des Routing-Teilnetzes mindestens ein Fronthaul-Netzwerk genanntes drahtloses Netzwerk ausstrahlt, die Knoten mindestens zwei Funkschnittstellen aufweisen, die es ermöglichen, auf zwei verschiedenen Kanälen zu kommunizieren, **dadurch gekennzeichnet, dass** das Verfahren die von einer Ausrüstung ausgeführten Schritte aufweist, um sich mit dem lokalen Netzwerk zu verknüpfen:
- Erhalt (E300), von jedem eine Abdeckungserweiterung drahtloser Kommunikation ermöglichenden Knoten und für jede Funkschnittstelle des Knotens, von Informationen, die mindestens eine für die Hierarchieebene des Knotens repräsentative Information sowie eine Information enthalten, die anzeigt, ob die Client-Schnittstelle der Funkschnittstelle des Knotens des Routing-Teilnetzes mit einer Zugangspunkt-Schnittstelle des Routing-Teilnetzes eines Knotens höherer Hierarchieebene vernetzt ist,
- Auswahl (E305, E311) des eine Abdeckungserweiterung drahtloser Kommunikation ermöglichenden Knotens, mit dem die Ausrüstung sich verknüpft, ausgehend von den erhaltenen Informationen und unter den eine Abdeckungserweiterung ermöglichenden Knoten, für die die Informationen erhalten wurden, die mindestens eine für die Hierarchieebene des Knotens repräsentative Information und die Information enthalten, die anzeigt, ob die Client-Schnittstelle der Funkschnittstelle des Knotens des Routing-Teilnetzes mit einer Zugangspunkt-Schnittstelle des Routing-Teilnetzes eines Knotens höherer Hierarchieebene vernetzt ist.

2. Verfahren nach Anspruch 1, **dadurch gekennzeichnet, dass** die sich mit dem lokalen Netzwerk verknüpfende Ausrüstung ein Knoten ist, der die Abdeckungserweiterung drahtloser Kommunikation gewährleisten kann, und dass die Ausrüstung, die ein Knoten ist, außerdem die Schritte ausführt:
- Bestimmung (E312), für den Knoten, von Informationen, die mindestens eine für die Hierarchieebene des Knotens repräsentative Information sowie eine Information enthalten, die anzeigt, ob die Client-Schnittstelle des Routing-Teilnetzes mit einer Zugangspunkt-Schnittstelle des Routing-Teilnetzes eines Knotens höherer Hierarchieebene vernetzt ist,
- Senden (E313) der bestimmten Informationen, die mindestens eine für die Hierarchieebene des Knotens repräsentative Information sowie eine Information enthalten, die anzeigt, ob die Client-Schnittstelle des Routing-Teilnetzes mit einer Zugangspunkt-Schnittstelle des Routing-Teilnetzes eines Knotens höherer Hierarchieebene vernetzt ist.

3. Verfahren nach Anspruch 1 oder 2, **dadurch gekennzeichnet, dass** die Informationen ausgehend von Informationen erhalten werden, die in spontanen Rahmen und/oder in Antwortrahmen auf eine Anforderung enthalten sind.

4. Verfahren nach einem der Ansprüche 1 bis 3, **dadurch gekennzeichnet, dass** die Funkschnittstelle eines Knotens, dessen Client-Schnittstelle sich mit der Zugangspunkt-Schnittstelle der Funkschnittstelle eines anderen Knotens verknüpft, den gleichen Kanal für alle Zugangspunkt-Schnittstellen der Funkschnittstelle, deren Client-Schnittstelle mit der Zugangspunkt-Schnittstelle der Funkschnittstelle des anderen Knotens verknüpft ist, wie der Kanal der Zugangspunkt-Schnittstelle der Funkschnittstelle des anderen Knotens wählt.

5. Verfahren nach Anspruch 4, **dadurch gekennzeichnet, dass** die Ausrüstung von jedem eine Abdeckungserweiterung drahtloser Kommunikation ermöglichenden Knoten Informationen erhält, die anzeigen, ob ein Knoten niedrigerer Hierarchieebene mit dem Zugangspunkt des Routing-Teilnetzes des Knotens verknüpft ist.

6. Verfahren nach einem der Ansprüche 1 bis 5, **dadurch gekennzeichnet, dass** die für die Hierarchieebene repräsentative Information ein ganzzahliger Wert ist, und wenn der Knoten sich mit einem eine Abdeckungserweiterung drahtloser Kommunikation ermöglichenden Knoten verknüpft, der ganzzahlige Wert für den Knoten, der sich verknüpft, inkrementiert wird.

7. Verfahren nach einem der Ansprüche 1 bis 5, **dadurch gekennzeichnet, dass** die für die Hierarchieebene repräsentative Information eine Messung der Zeit ist, die gebraucht wird, um eine Antwort zwischen dem Knoten und einem als Internet-Gateway dienenden Knoten zu empfangen.

8. Verfahren nach einem der Ansprüche 1 bis 5, **dadurch gekennzeichnet, dass** die für die Hierarchieebene repräsentative Information eine Darstellung des kumulierten Besetztzustands der Verbindung zwischen jedem eine Abdeckungserweiterung drahtloser Kommunikation ermöglichenden Knoten und einem als Internet-Gateway dienenden Knoten ist.

9. Vorrichtung zur Auswahl eines Knotens in einem lokalen Netzwerk, das eine Abdeckungserweiterung drahtloser Kommunikation ermöglichende Knoten enthält, um die Reichweite des lokalen Netzwerks zu erhöhen, indem mehrere in die Knoten integrierte Zugangspunkte koordiniert werden, wobei die Knoten durch eine Zugangspunkt-Schnittstelle eines Routing-Teilnetzes und eine Client-Schnittstelle des Routing-Teilnetzes eines anderen Knotens miteinander vernetzt werden, wobei jeder Knoten des Routing-Teilnetzes mindestens ein Fronthaul-Netzwerk genanntes drahtloses Netzwerk ausstrahlt, **dadurch gekennzeichnet, dass** die Vorrichtung in einer Ausrüstung zur Verknüpfung mit dem lokalen Netzwerk enthalten ist und aufweist:
- Einrichtungen zum Erhalt von jedem eine Abdeckungserweiterung drahtloser Kommunikation ermöglichenden Knoten von Informationen, die mindestens eine für die Hierarchieebene des Knotens repräsentative Information sowie eine Information enthalten, die anzeigt, ob die Client-Schnittstelle des Routing-Teilnetzes mit einer Zugangspunkt-Schnittstelle des Routing-Teilnetzes eines Knotens höherer Hierarchieebene vernetzt ist,
- Einrichtungen zur Auswahl des eine Abdeckungserweiterung drahtloser Kommunikation ermöglichenden Knotens, mit dem die Ausrüstung sich verknüpft, ausgehend von den erhaltenen Informationen und unter den eine Abdeckungserweiterung ermöglichenden Knoten, für die die Informationen erhalten wurden, die mindestens eine für die Hierarchieebene des Knotens repräsentative Information und die Information enthalten, die anzeigt, ob die Client-Schnittstelle der Funkschnittstelle des Knotens des Routing-Teilnetzes mit einer Zugangspunkt-Schnittstelle des Routing-Teilnetzes eines Knotens höherer Hierarchieebene vernetzt ist.

10. Computerprogrammprodukt, **dadurch gekennzeichnet, dass** es Anweisungen enthält, um das Verfahren nach einem der Ansprüche 1 bis 8 durch eine Ausrüstung zu implementieren, wenn das Programm von einem Prozessor der Ausrüstung ausgeführt wird.

11. Speicherträger, **dadurch gekennzeichnet, dass** er ein Computerprogramm speichert, das Anweisungen enthält, um das Verfahren nach einem der Ansprüche 1 bis 8 durch eine Ausrüstung zu implementieren, wenn das Programm von einem Prozessor der Ausrüstung ausgeführt wird.

## Claims

1. Method for selecting a node in a local area network comprising nodes allowing an extension of wireless communication coverage in order to increase the range of the local area network by coordinating a plurality of access points incorporated in the nodes, the nodes being interconnected by an access-point interface of a backhaul network and a client interface of the backhaul network of another node, each node in the backhaul subnetwork sending at least one wireless network called fronthaul network, the nodes comprising at least two radio interfaces making it possible to communicate on two different channels, **characterised in that** the method comprises the steps, performed by an item of equipment for associating itself with the local area network, of:
- obtaining (E300), from each node allowing an extension of wireless communication coverage, information comprising at least one item of information representing the hierarchical level of the node as well as an item of information indicating whether the client interface of the radio interface of the node of the backhaul subnetwork is connected to an access-point interface of the backhaul subnetwork of a node of a higher hierarchical level,
- selecting (E305, E311), from the information obtained and from the nodes allowing an extension of coverage for which the information comprising at least one item of information representing the hierarchical level of the node and the information indicating whether the client interface of the radio interface of the node of the backhaul subnetwork is connected to an access-point interface of the backhaul subnetwork of a node of a higher hierarchical level has been obtained, the node allowing an extension of wireless communication coverage with which the equipment associates itself.

2. Method according to claim 1, **characterised in that** the equipment associating itself with the local area network is a node that can provide the extension of wireless communication coverage and **in that** the equipment that is a node furthermore performs the steps of:
- determining (E312), for the node, information comprising at least one item of information representing the hierarchical level of the node as well as an item of information indicating whether the client interface of the backhaul subnetwork is connected to an access-point interface of the backhaul subnetwork of a node of a higher hierarchical level,
- sending (E313) determined information comprising at least one item of information representing the hierarchical level of the node as well as an item of information indicating whether the client interface of the backhaul subnetwork is connected to an access-point interface of the backhaul network of a node of higher hierarchical level.

3. Method according to claim 1 or 2, **characterised in that** the information is obtained from information included in spontaneous frames and/or in frames responding to a probe.

4. Method according to any one of claims 1 to 3, **characterised in that** the radio interface of a node the client interface of which associates itself with the access-point interface of the radio interface of another node selects the same channel, for all the access-point interfaces of the radio interface the client interface of which is associated with the access-point interface of the radio interface of the other node, as the channel of the access-point interface of the radio interface of the other node.

5. Method according to claim 4, **characterised in that** the equipment obtains, from each node allowing an extension of wireless communication coverage, information indicating whether a node of a lower hierarchical level is associated with the access point of the backhaul subnetwork of the node.

6. Method according to any one of claims 1 to 5, **characterised in that** the information representing the hierarchical level is an integer value and, when the node associates itself with a node allowing an extension of wireless communication coverage, the integer value for the node that associates itself is incremented.

7. Method according to any one of claims 1 to 5, **characterised in that** the information representing the hierarchical level is a measurement of the time taken for receiving a response between the node and a node serving as an internet gateway.

8. Method according to any one of claims 1 to 5, **characterised in that** the information representing the hierarchical level is a representation of the total state of occupation of the link between each node allowing an extension of wireless communication coverage and a node serving as an internet gateway.

9. Device for selecting a node in a local area network comprising nodes allowing an extension of wireless communication coverage in order to increase the range of the local area network by coordinating a plurality of access points incorporated in the nodes, the nodes being interconnected by an access-point interface of a backhaul subnetwork and a client interface of the backhaul subnetwork of another node, each node in the backhaul network sending at least one wireless network called fronthaul network, **characterised in that** the device is included in an item of equipment for associating itself with the local area network, and comprises:
- means for obtaining, from each node allowing an extension of wireless communication coverage, information comprising at least one item of information representing the hierarchical level of the node as well as an item of information indicating whether the client interface of the backhaul subnetwork is connected to an access-point interface of the backhaul subnetwork of a node of a higher hierarchical level,
- means for selecting, from the information obtained and from the nodes allowing an extension of coverage for which the information comprising at least one item of information representing the hierarchical level of the node and the information indicating whether the client interface of the radio interface of the node of the backhaul subnetwork is connected to an access-point interface of the backhaul subnetwork of a node of a higher hierarchical level has been obtained, the node allowing an extension of wireless communication coverage with which the equipment is associated.

10. A computer program product **characterised in that** it comprises instructions for implementing, by an item of equipment, the method according to any one of claims 1 to 8, when said program is executed by a processor of the equipment.

11. A storage medium **characterised in that** it stores a computer program comprising instructions for implementing, by an item of equipment, the method according to any one of claims 1 to 8, when said program is executed by a processor of the equipment.
